# EUROPÄISCHE PATENTSCHRIFT

(11) **EP 4 397 869 B1**
(45) Veröffentlichungstag und Bekanntmachung des Hinweises auf die Patenterteilung: **25.02.2026**
(21) Anmeldenummer: 24178338.0
(22) Anmeldetag: 20.12.2021
(51) Int. Cl.: F16B 37/06

(54) **FUNKTIONSELEMENT, ZUSAMMENBAUTEIL UND VERFAHREN ZUM HERSTELLEN EINES ZUSAMMENBAUTEILS**
FUNCTIONAL ELEMENT, ASSEMBLED COMPONENT AND METHOD FOR PRODUCING AN ASSEMBLED COMPONENT
ÉLÉMENT FONCTIONNEL, COMPOSANT D'ASSEMBLAGE ET PROCÉDÉ DE FABRICATION D'UN COMPOSANT D'ASSEMBLAGE

(30) Priorität: 05.01.2021 DE 102021100073
(43) Veröffentlichungstag der Anmeldung: 10.07.2024
(62) Teilanmeldung aus: 21215812.5
(73) Patentinhaber: Profil Verbindungstechnik GmbH & Co. KG, 61381 Friedrichsdorf (DE)
(72) Erfinder: Mahlme, Amer, 61352 Bad Homburg (DE); Diehl, Oliver, 61250 Usingen (DE); Jene Dr., Tobias, 61381 Friedrichsdorf (DE)
(74) Vertreter: Manitz Finsterwald Patent- und Rechtsanwaltspartnerschaft mbB

(56) Entgegenhaltungen:
- EP-A2- 1 923 583
- WO-A1-95/27147
- CN-A- 103 382 957
- US-A- 3 276 499
- US-A1- 2006 222 473
- US-A1- 2013 149 067
- US-B2- 8 734 071

## Beschreibung

Die Erfindung betrifft ein Funktionselement zum Einpressen in ein Werkstück, insbesondere in ein Blechteil, ein Zusammenbauteil, das ein Werkstück mit einem Loch, insbesondere ein Blechteil, und ein derartiges Funktionselement aufweist, sowie ein Verfahren zum Herstellen des Zusammenbauteils.

Derartige Elemente weisen in der Regel einen Funktionsabschnitt auf, der wiederum zur Befestigung weiterer Komponenten dient. Sie finden u.a. im Automobilbau eine breite Anwendung.

Bei Funktionselementen kann es sich um Bolzenelemente, deren Schaft mit einem Gewinde versehen sein kann, oder um Mutterelemente handeln, die zum Beispiel ein Innengewinde aufweisen.

Funktionselemente sind in verschiedenen Ausführungen bekannt. Einerseits gibt es beispielsweise Nietelemente, die einen Nietabschnitt aufweisen, der bei der Anbringung an ein Blechteil verformt wird, um einen Nietbördel auszubilden und mit dem Kopfteil eine ringförmige Aufnahme für den Rand eines Lochs im Blechteil zu bilden. Bei solchen Nietelementen wird also das Funktionselement bei der Anbringung an das Blechteil verformt. Ferner sind Einpresselemente bekannt, bei denen das Element selbst bei der Anbringung an ein Blechteil nicht absichtlich verformt wird, sondern das Blechmaterial selbst wird verformt, um dieses in Eingriff mit Hinterschneidungen des jeweiligen Einpresselements zu bringen.

Ein zum Einpressen geeignetes Funktionselement ist beispielsweise aus US 8,734,071 B2 bekannt. CN 103 382 957 A offenbart ein Bolzenelement mit einem Dichtungsbereich, der durch einen umlaufenden Vorsprung abgeschlossen wird. Um Verbindungen zwischen Funktionselementen und Werkstücken, insbesondere Blechteilen, abzudichten, wird üblicherweise eine dafür vorgesehene Beschichtung auf Teile der Funktionselemente, die das Werkstück kontaktieren, aufgetragen. Das Auftragen findet in einem separaten Herstellungsschritt statt, der zu einem erhöhten Aufwand und dadurch zu höheren Kosten und einem erhöhten Zeitbedarf führt. Zudem bedingt diese Lösung aufgrund der Beschichtung eine erhöhte Umweltbelastung.

Es ist eine Aufgabe der vorliegenden Erfindung, ein Funktionselement und ein Zusammenbauteil bereitzustellen, mit welchen eine dichte Verbindung bei verhältnismäßig geringem Aufwand und gegenüber vorbekannten Lösungen eine verringerte Umweltbelastung erzielt werden kann.

Diese Aufgabe wird durch den Gegenstand der unabhängigen Ansprüche 1 und 13 gelöst Vorteilhafte Ausgestaltungen sind Gegenstand der Unteransprüche.

Das erfindungsgemäße Funktionselement gemäß Anspruch 1 ist zum Einpressen in ein Werkstück insbesondere in ein Blechteil, geeignet und umfasst einen Funktionsabschnitt und einen Befestigungsabschnitt mit einer Anschlagfläche zum Einleiten einer Einpresskraft in das Funktionselement, einer der Anschlagfläche gegenüberliegenden Werkstückanlagefläche, die in Anlage mit dem Werkstück bringbar ist und insbesondere flanschartig ausgestaltet ist, und einem in einer Axialrichtung und/oder einer Radialrichtung des Funktionselements zwischen der Werkstückanlagefläche und dem Funktionsabschnitt liegenden Dichtungsbereich zum Aufnehmen von verdrängtem Material des Werkstücks. Der Dichtungsbereich bildet eine Anpressfläche für das verdrängte Material aus, um eine Verbindung zwischen dem Funktionselement und dem Werkstück abzudichten, wobei der Befestigungsabschnitt einen Vorsprung aufweist, der den Dichtungsbereich in Axialrichtung begrenzt und der eine dem Dichtungsbereich zugewandte erste Flanke sowie eine dem Dichtungsbereich abgewandte zweite Flanke aufweist, die schräg und unterschiedlich stark geneigt zu der Axialrichtung verlaufen. Die erste Flanke ist stärker zu der Axialrichtung geneigt als die zweite Flanke, wobei die zweite Flanke etwa 15° bis etwa 35° zu der Axialrichtung geneigt ist. Die Werkstückanlagefläche weist eine Erhebung auf, die in einem Querschnitt gesehen zumindest abschnittsweise keilförmig ausgestaltet ist.

Der Vorsprung kann insbesondere in Umfangsrichtung umlaufend an dem Schaft eines als Bolzenelement ausgestalteten Funktionselements vorgesehen sein und auch als Lippe bezeichnet werden. Der Vorsprung steht vorzugsweise radial nach außen hervor und umfasst zumindest die erste Flanke und die zweite Flanke. Insbesondere kann die erste Flanke zumindest einen Teil der Anpressfläche ausbilden, insbesondere die zweite Teilfläche.

Durch den Vorsprung wird ein Hinterschnitt ausgebildet, welcher den Dichtungsbereich abschließt und das Funktionselement sicher in dem Werkstück hält. Das verdrängte Material des Werkstücks kann dadurch in Axialrichtung zwischen der Werkstückanlagefläche bzw. der Anpressfläche einerseits und dem Vorsprung andererseits eingeschlossen sein. Gleichzeitig kann der Vorsprung, insbesondere die erste Flanke, auch einen Teil der Anpressfläche ausbilden, um eine hohe Dichtungswirkung zu erzielen.

Dadurch dass die erste Flanke stärker zu der Axialrichtung geneigt ist als die zweite Flanke, wird einerseits die Wirkung des Hinterschnitts, also der Halt des Funktionselement im Werkstück, verbessert, und andererseits wird beim Einpressen des Funktionselements in das Werkstück in der Einpressrichtung, in welcher die zweite Flanke vorsteht, das Einbringen des Funktionselements erleichtert.

Insbesondere kann die erste Flanke etwa 50° bis etwa 70°, insbesondere etwa 60°, zu der Axialrichtung geneigt sein.

In bevorzugter Ausgestaltung ist die zweite Flanke etwa 25° zu der Axialrichtung geneigt.

Die erste Flanke und die zweite Flanke können zweckmäßig durch einen Verbindungsabschnitt miteinander verbunden sein, in dem der Vorsprung einen konstanten Durchmesser aufweist, sodass die Ausgestaltung des Vorsprungs den Gegebenheiten, insbesondere einer Blechdicke des Werkstücks, angepasst werden kann, ohne die Funktion der Flanken zu beeinträchtigen. Der Verbindungsabschnitt verläuft bei dieser Ausführungsform somit in axialer Richtung. Vorzugsweise kann sich der Verbindungsabschnitt über etwa 20 % bis etwa 70 %, insbesondere etwa 40 %, der axialen Erstreckung des Vorsprungs erstrecken.

Insbesondere weist der Befestigungsabschnitt, z.B. die Werkstückanlagefläche, wenigstens ein Verdrehsicherungsmerkmal auf. Bevorzugt sind mehrere Verdrehsicherungsmerkmale vorgesehen, die beispielsweise in axialer Richtung und/oder Umfangsrichtung gleichmäßig verteilt angeordnet sind. Durch die Verdrehsicherungsmerkmale kann sichergestellt werden, dass eine Verbindung des Funktionselements mit dem Werkstück einem später über den Funktionsabschnitt eingebrachten Drehmomentbelastung standhält. Die Verdrehsicherungsmerkmale können in einer Vertiefung oder einer umlaufenden Nut des Befestigungsabschnitt, insbesondere eines Kopfs des Funktionselements, welcher die Anschlagfläche und/oder die Werkstückanlagefläche umfasst, angeordnet sein.

Die Verdrehsicherungsmerkmale können als sich radial und/oder axial erstreckende Rippen oder Nuten ausgebildet sein. Insbesondere sind die Verdrehsicherungsmerkmale gleichmäßig angeordnet und erstrecken sich in gleichen Winkelabständen zueinander in radialer Richtung.

Die Werkstückanlagefläche kann eine Vertiefung, insbesondere eine Ringvertiefung, aufweisen, wobei sich die erste Teilfläche in die Vertiefung erstrecken und/oder in diese übergehen kann.

Die Werkstückanlagefläche weist die Erhebung auf, die in einem Querschnitt gesehen zumindest abschnittsweise keilförmig ausgestaltet ist. Die Keilform fällt vorzugsweise zu der ersten Teilfläche hin ab. Die erste Teilfläche kann in die Erhebung übergehen.

Eine Funktion der Erhebung kann sein, bei einem Zusammenwirken des Elements mit dem Werkstück eine Verdrängung von Material des Werkstücks in den Dichtungsbereich zu unterstützen.

Die Verdrehsicherungsmerkmale - so vorhanden - können in der Vertiefung und/oder an der Erhebung angeordnet sein.

Die Vertiefung kann insbesondere einer Einpressrichtung des Funktionselements entgegengerichtet sein, sodass das Material des Werkstücks, zumindest teilweise, beim Einpressen in die Vertiefung verdrängt wird und dort insbesondere an die erste Teilfläche der Anpressfläche angepresst wird.

In vorteilhafter Ausgestaltung geht die Werkstückanlagefläche in die erste Teilfläche über.

Die Erfindung betrifft ferner ein Zusammenbauteil, das ein Werkstück, insbesondere ein Blechteil, aufweist, wobei ein Funktionselement gemäß zumindest einer der vorstehend beschriebenen Ausführungsformen in ein in dem Werkstück vorgefertigtes Loch oder ein durch das Funktionselement gestanztes Loch eingepresst ist. Das erfindungsgemäße Funktionselement ist dabei derart in das Loch eingepresst, sodass durch das Einpressen oder nach dem Einpressen verdrängtes Material des Werkstücks in dem Dichtungsbereich aufgenommen ist und dicht an der Anpressfläche anliegt.

Insbesondere liegt das verdrängte Material des Werkstücks an dem Vorsprung an oder umschließt den Vorsprung zumindest teilweise oder vollständig.

Eine Dicke des Werkstücks kann zumindest im Bereich des Lochs kleiner oder im Wesentlichen gleich einer axialen Erstreckung des Dichtungsbereichs sein. Alternativ kann eine Dicke des Werkstücks zumindest im Bereich des Lochs jedoch auch größer oder im Wesentlichen gleich einer axialen Erstreckung des Dichtungsbereichs sein.

Gemäß einem weiteren Aspekt betrifft die Erfindung ferner ein Verfahren zum Herstellen eines erfindungsgemäßen Zusammenbauteils, gemäß Anspruch 13, welches die folgenden

Schritte umfasst:
- Bereitstellen eines erfindungsgemäßen Funktionselements,
- Bereitstellen eines Werkstücks, insbesondere eines Blechteils, und
- Einführen des Funktionselements in ein vorgefertigtes Loch in dem Werkstück oder in ein durch das Funktionselement gestanztes Loch und Einleiten einer Einpresskraft in die Anschlagfläche, sodass die Werkstückanlagefläche in Anlage mit dem Werkstück gebracht wird, und
- Verdrängen von Material des Werkstücks in den Dichtungsbereich, so dass das Material an die Anpressfläche angepresst wird, um eine dichte Verbindung zwischen dem Funktionselement und dem Werkstück herzustellen.

Gemäß einer Ausführungsform ist das Funktionselement selbststanzend, sodass ein Vorlochen des Werkstücks entbehrlich ist.

Das Verdrängen des Materials kann durch Anpressen einer Matrize gegen eine der Werkstückanlagefläche abgewandte Oberfläche des Werkstücks erfolgen. Die Matrize ist dabei geeignet ausgestaltet, um das Material des Werkstücks in den Dichtungsbereich zu verdrängen, sodass das Material an die Anpressfläche angepresst wird, um eine dichte Verbindung zwischen dem Funktionselement und dem Werkstück herzustellen.

Insbesondere liegt das Werkstück bei dem Verfahren auf einer Auflage auf, die eine geeignete Matrize umfasst. Die eingeleitete Einpresskraft dient dann auch zum Verdrängen des Materials. Es ist aber auch möglich, die Matrize während oder nach dem Einführen des Funktionselements in das Loch und/oder dem Einleiten der Einpresskraft die Matrize gegen die der Werkstückanlagefläche abgewandte Oberfläche des Werkstücks zu pressen, um Material des Werkstücks zu verdrängen.

Das Verdrängen des Materials des Werkstücks kann auch durch Komponenten des Kopfs des Elements während dem Einpressen bewirkt werden.

Die Erfindung wird nachfolgend anhand von vorteilhaften Ausführungsformen rein beispielhaft erläutert. In den Zeichnungen, die die Ausführungsbeispiele schematisch veranschaulichen, zeigt
- Fig. 1: eine perspektivische Ansicht eines als Einpressbolzen ausgebildeten Funktionselements gemäß einem Ausführungsbeispiel außerhalb des beanspruchten Schutzumfangs,
- Fig. 2: eine weitere perspektivische Ansicht des Funktionselements aus Fig. 1,
- Fig. 3a: einen Halbschnitt des Funktionselements aus Fig. 1,
- Fig. 3b: eine Detailansicht des Bereichs A gemäß Fig. 3a,
- Fig. 4: eine Detailansicht von einem Dichtungsbereich eines als Einpressbolzen ausgebildeten Funktionselements gemäß einem weiteren Ausführungsbeispiel außerhalb des beanspruchten Schutzumfangs,
- Fig. 5: eine Detailansicht von einem Dichtungsbereich eines als Einpressbolzen ausgebildeten Funktionselements gemäß einem weiteren Ausführungsbeispiel außerhalb des beanspruchten Schutzumfangs,
- Fig. 6a: einen Halbschnitt eines Zusammenbauteils gemäß einem Ausführungsbeispiel außerhalb des beanspruchten Schutzumfangs, mit einem Einpressbolzen als Funktionselement
- Fig. 6b: eine Detailansicht des Bereichs B gemäß Fig. 6a,
- Fig. 7a: einen Halbschnitt eines Zusammenbauteils gemäß einem weiteren Ausführungsbeispiel außerhalb des beanspruchten Schutzumfangs, mit einem Einpressbolzen als Funktionselement,
- Fig. 7b: eine Detailansicht des Bereichs C gemäß Fig. 7a,
- Fig. 8a: einen Halbschnitt eines Zusammenbauteils gemäß einem weiteren Ausführungsbeispiel außerhalb des beanspruchten Schutzumfangs, mit einem Einpressbolzen als Funktionselement,
- Fig. 8b: eine Detailansicht des Bereichs D gemäß Fig. 8a,
- Fig. 9: eine perspektivische Ansicht eines als Mutterelement ausgebildeten Funktionselements gemäß einem erfindungsgemäßen Ausführungsbeispiel
- Fig. 10: eine weitere perspektivische Ansicht des Funktionselements aus Fig. 9,
- Fig. 11a: einen Halbschnitt des Funktionselements aus Fig. 9,
- Fig. 11b: eine Detailansicht des Bereichs E gemäß Fig. 11a,
- Fig. 12a: einen Halbschnitt eines Zusammenbauteils gemäß einem Ausführungsbeispiel mit einem Mutterelement als Funktionselement und
- Fig. 12b: eine Detailansicht des Bereichs F gemäß Fig. 12a.

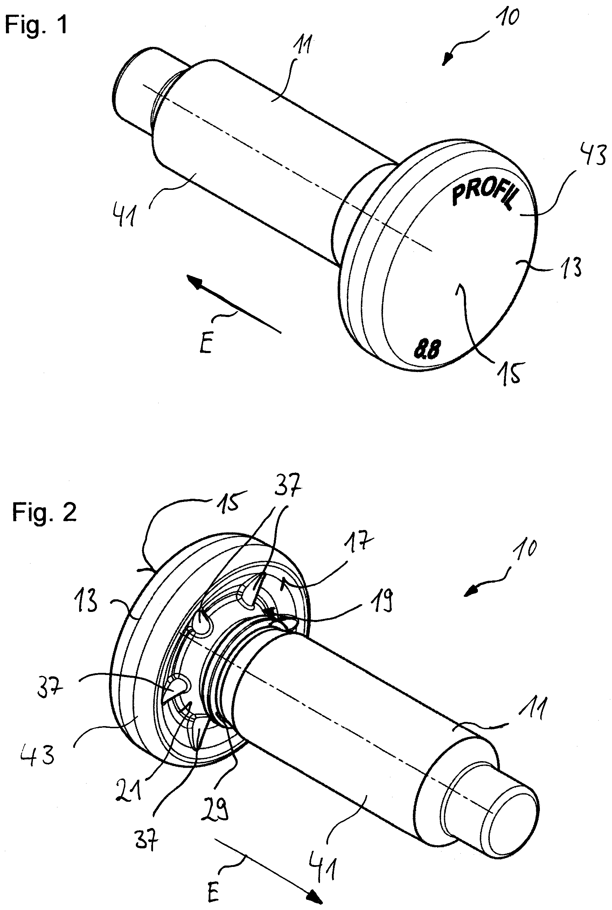

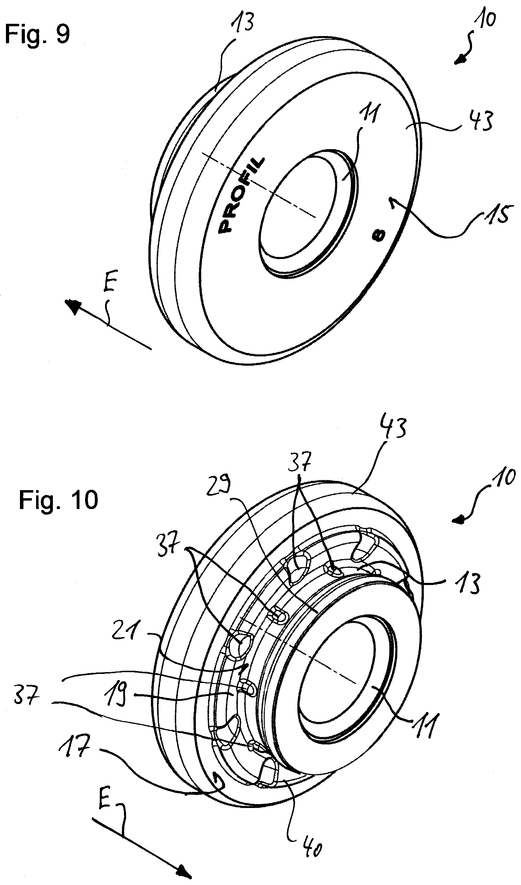

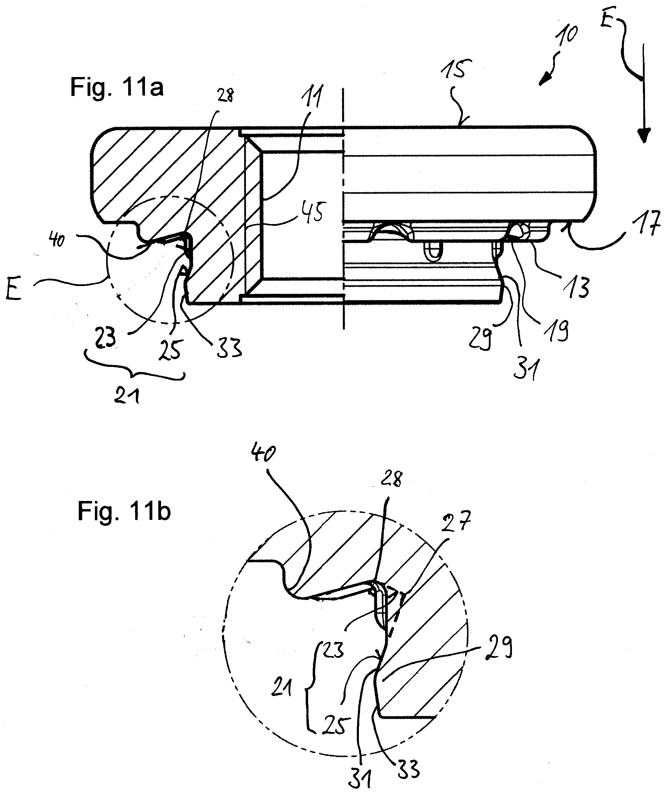

Aus Fig. 1 und 2 ist jeweils ein als Einpressbolzen mit Flansch ausgebildetes Funktionselement 10 ersichtlich, und Fig. 9 und 10 zeigen ein als Mutterelement ausgebildetes Funktionselement 10, welche einen Funktionsabschnitt 11 und einen Befestigungsabschnitt 13 aufweisen. Der Befestigungsabschnitt 13 ist der Abschnitt des Funktionselements 10, mit dem das Funktionselement 10 an einem später noch näher beschriebenen Werkstück 50 befestigt wird. Die Funktionselemente 10 weisen jeweils einen Kopf 43. Das als Einpressbolzen ausgebildete Funktionselement 10 gemäß Fig. 1 und 2 weist zudem einen Schaft 41 auf, an welchem ein Gewinde 45 (Außengewinde) ausgebildet ist. An dem als Mutterelement ausgebildeten Funktionselement 10 ist ein Innengewinde 45 (siehe Fig. 11a) vorgesehen.

Der jeweilige Kopf 43 weist eine Anschlagfläche 15 zum Einleiten einer Einpresskraft in das Funktionselement 10 und eine der Anschlagfläche 15 gegenüberliegende, flanschartige Werkstückanlagefläche 17 auf. In einer Axialrichtung und/oder Radialrichtung des Funktionselements 10 befindet sich zwischen der Werkstückanlagefläche 17 und dem Funktionsabschnitt 11 ein Dichtungsbereich 19, welcher eine Anpressfläche 21 für verdrängtes Material des Werkstücks 50 aufweist, um eine Verbindung zwischen dem Funktionselement 10 und dem Werkstück 50 abzudichten.

Der Schaft 41 des Elements 10 der Fig. 1 und 2 erstreckt sich von der der Anschlagfläche 15 abgewandten Seite. Es ist aber auch möglich, den Schaft an der Anschlagfläche 15 anzuordnen (diese wäre bei einem Schaft mit rundem Querschnitt dann ringförmig). Bei einer ansonsten unveränderten Ausgestaltung des Befestigungsabschnitts 13 liegt der Dichtungsbereich 19 in einer axialen Ansicht dann ebenfalls zwischen der Werkstückanlagefläche 17 und dem Funktionsabschnitt 11.

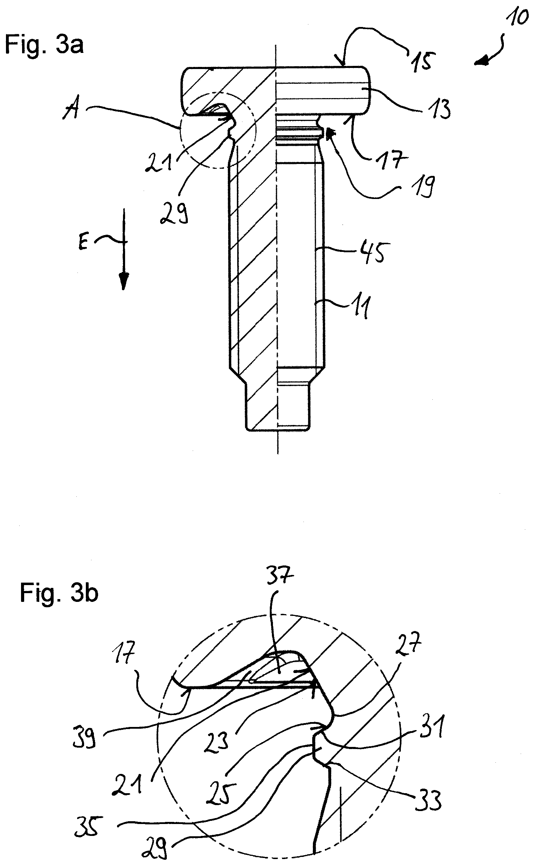

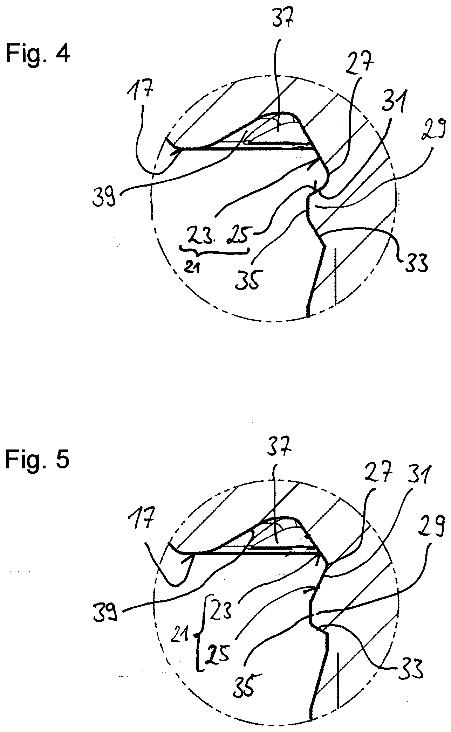

Die Ausgestaltung der Anpressfläche 21 ist anschaulich in Fig. 3a bis Fig. 5 gezeigt. Diese umfasst eine konusförmige erste Teilfläche 23, die schräg zu der Axialrichtung des Funktionselements 10 verläuft und in einer Einpressrichtung E des Funktionselements 10 gesehen konvergiert, und eine, in Einpressrichtung E gesehen, zwischen der ersten Teilfläche 23 und dem Funktionsabschnitt 11 liegende konusförmige zweite Teilfläche 25, die sich mittels eines abgerundeten Übergangsbereichs 27 an die erste Teilfläche 23 anschließt, ebenfalls schräg zu der Axialrichtung des Funktionselements 10 verläuft und in der Einpressrichtung E des Funktionselements 10 gesehen divergiert. Konkret kann die erste Teilfläche 23 etwa 20° bis etwa 40°, insbesondere etwa 30°, zu der Axialrichtung geneigt sein, und die zweite Teilfläche 25 kann etwa 50° bis etwa 70°, insbesondere etwa 60°, zu der Axialrichtung geneigt sein. Wie beispielsweise aus Fig. 3b und Fig. 4 ersichtlich ist, können die beiden Teilfläche 23, 25 in etwa rechtwinklig zueinander verlaufen. Alternativ kann der Winkel zwischen den Teilflächen 23, 25, wie in Fig. 5 gezeigt, auch größer als 90° sein, etwa bis zu 135°.

Wie das Ausführungsbeispiel in Fig. 11a bis 12b anschaulich zeigt, umfasst auch die Anpressfläche 21 des als Mutterelement ausgestalteten Funktionselements 10 eine erste Teilfläche 23 und eine konusförmige zweite Teilfläche 25, die sich mittels eines abgerundeten Übergangsbereichs 27 an die erste Teilfläche 23 anschließt, schräg zu der Axialrichtung des Funktionselements 10 verläuft und in der Einpressrichtung E des Funktionselements 10 gesehen divergiert. Die erste Teilfläche 23 verläuft im vorliegenden Beispiel näherungsweise parallel zur Einpressrichtung E, allerdings kann das Funktionselement 10 auch so ausgestaltet sein, dass die erste Teilfläche 23 schräg zu der Axialrichtung verläuft und in der Einpressrichtung E gesehen konvergiert, wie in Fig. 11b mit gestrichelten Linien angedeutet.

Die Einpressrichtung E bezeichnet dabei die Richtung, in welcher das Funktionselement 10 in das Blechteil 50 bestimmungsgemäß eingepresst wird. Die Einpressrichtung E verläuft parallel zu der Axialrichtung des Funktionselements 10 von der Anschlagfläche 15 in Richtung zu der Werkstückanlagefläche 17, wobei die Anschlagfläche 15 und die Werkstückanlagefläche 17 etwa senkrecht zu der Einpressrichtung E verlaufen.

Die Anpressfläche 21, und zwar die erste Teilfläche 23, erstreckt sich in eine in den Kopf 43 eingebrachte (Ring-)Vertiefung 39 der Elemente 10 gemäß den Fig. 1 bis 8b und geht dort in die Werkstückanlagefläche 17 über. In der Vertiefung 39 sind mehrere sich radial erstreckende Rippen als Verdrehsicherungsmerkmale 37 ausgebildet. Die Vertiefung 39 ist ferner der Einpressrichtung E des Funktionselements 10 entgegengerichtet, sodass Material des Werkstücks 50 zumindest teilweise beim Einpressen in die Vertiefung 39 verdrängt werden kann und sich dabei an die erste Teilfläche 23 anschmiegt.

Das Element 10 gemäß den Fig. 9 bis 11b weist diese Vertiefung 39 nicht auf. Anstatt dessen ist eine keilförmige Erhebung 40 vorgesehen, die nach radial innen abfällt und über einen gerundeten Übergangsabschnitt 28 in die erste Teilfläche 23 übergeht. Die Fläche 23 weist in dem gezeigten Ausführungsbeispiel Verdrehsicherungsmerkmale 37 in Form von in Umfangrichtung gleichmäßig verteilten axialen Rippen auf. Auch die Erhebung weist bevorzugt Verdrehsicherungsmerkmale 37 auf, hier beispielhaft in Umfangrichtung gleichmäßig verteilte radiale Nuten.

Die vorstehend beschriebene Vertiefung 39 und die Erhebung 40 lassen sich bei Bedarf - auch in abgewandelter Form - kombinieren und sowohl bei einem Mutterelement als auch bei einem Bolzenelement realisieren.

Der Befestigungsabschnitt 13 umfasst außerdem einen sich umlaufend radial nach außen erstreckenden Vorsprung 29, der den Dichtungsbereich 19 in Axialrichtung begrenzt. Der Vorsprung 29 weist eine dem Dichtungsbereich 19 zugewandte erste Flanke 31, an der die zweite Teilfläche 25 der Anpressfläche 21 ausgebildet ist und eine dem Dichtungsbereich 19 abgewandte zweite Flanke 33 auf. Der Vorsprung 29 des als Einpressbolzen ausgebildeten Funktionselements 10 weist darüber hinaus, anders als das Mutterelement, einen optionalen Verbindungsabschnitt 35 auf, der die beiden Flanken 31, 33 miteinander verbindet. Der Durchmesser des Vorsprungs 29 variiert entlang dessen axialer Erstreckung und nimmt, in Einpressrichtung E gesehen, im Bereich der ersten Flanke 31 zu, bleibt im Bereich des Verbindungsabschnitts 35 konstant und nimmt im Bereich der zweiten Flanke 33 ab. Die Flanken 31, 33 verlaufen dementsprechend schräg zu der Axialrichtung des Funktionselements 10.

Wie insbesondere Fig. 4 zeigt, kann die erste Flanke 31 stärker zu der Axialrichtung geneigt sein als die zweite Flanke 33. Hieraus ergibt sich einerseits eine besonders effektive Ausgestaltung der Anpressfläche 21 und ein wirksamer Hinterschnitt durch den Vorsprung 29. Andererseits erleichtert eine vergleichsweise geringe Anstellung oder Schrägstellung der zweiten Flanke 33 das Einbringen des Vorsprungs 29 in das Formloch.

Alternativ dazu kann der Vorsprung 29 etwa symmetrisch ausgestaltet sein, wodurch sich eine gleiche Neigung der Flanken 31, 33 zu der Axialrichtung ergibt (siehe beispielsweise Fig. 3b), oder die erste Flanke 31 kann weniger stark zu der Axialrichtung geneigt sein als die zweite Flanke 33, wie beispielsweise in Fig. 5 gezeigt. Konkret kann die erste Flanke 31 vorteilhaft etwa 50° bis etwa 70°, insbesondere etwa 60°, zu der Axialrichtung geneigt sein, und die zweite Flanke 33 kann etwa 15° bis etwa 35°, insbesondere etwa 25°, zu der Axialrichtung geneigt sein.

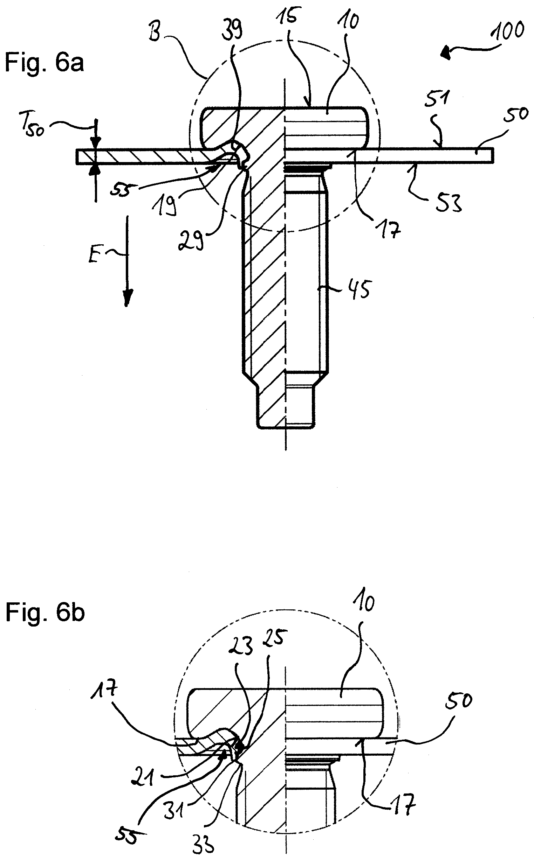

Das Zusammenwirken des Funktionselements 10 mit dem Werkstück 50 ist anschaulich insbesondere aus Fig. 6a bis Fig. 8b und Fig. 12a und 12b ersichtlich, welche jeweils ein Zusammenbauteil 100 gemäß der vorliegenden Erfindung zeigen. Wie gezeigt, ist das Werkstück 50 jeweils beispielhaft als Blechteil mit vorzugsweise duktilen Eigenschaften ausgebildet. Das Werkstück 50 weist jeweils eine Oberfläche 51, an welcher die Werkstückanlagefläche 17 des Funktionselements 10 anliegt, und eine Oberfläche 53 auf einer gegenüberliegenden Seite des Werkstücks 50 auf. Das in den Fig. 6a, 6b, 7a, 7b bzw. 8a, 8b jeweils gezeigt Werkstück 50 weist zunehmenden Dicken T₅₀ auf, um zu verdeutlichen, dass sich das erfindungsgemäße Konzept bei Werkstücken mit den unterschiedlichsten Eigenschaften einsetzen lässt.

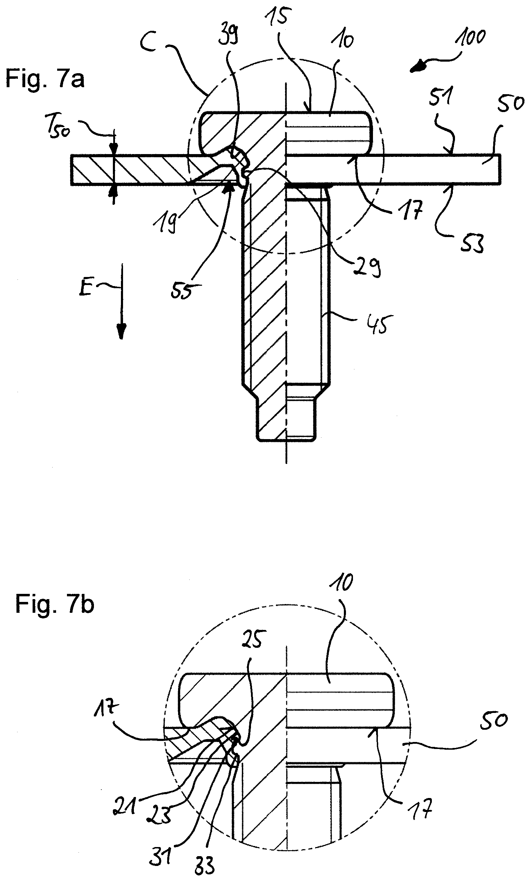

Das Funktionselement 10 ist jeweils in ein in dem Werkstück 50 vorgesehenes Formloch, beispielsweise eine Bohrung oder ein vorgestanztes Loch, eingepresst, sodass verdrängtes Material des Werkstücks 50 und in dem Dichtungsbereich 19 und - so vorhanden - in der Vertiefung 39 aufgenommen ist und dicht an der Anpressfläche 21 anliegt. Dies wird durch die schräge Anordnung der ersten Teilfläche 23 vereinfacht, da das Material nicht so tief in den Dichtungsbereich 19 gepresst werden muss, um mit ihr in flächige Anlage zu gelangen. Dabei liegt das verdrängte Material des Werkstücks 50, je nach Dicke T₅₀ des Werkstücks 50, an dem Vorsprung 29 an (Fig. 6b, Fig. 8b, Fig. 12b) oder umschließt ihn gar vollständig (Fig. 7b). Dadurch ermöglicht das erfindungsgemäße Funktionselement 10 die Herstellung hervorragend abgedichteter Zusammenbauteile 100, und zwar unabhängig von einer Dicke T₅₀ des jeweiligen Werkstücks 50.

Zur Herstellung der in Fig. 6a bis Fig. 7b gezeigten Zusammenbauteile 100 kann insbesondere wie folgt vorgegangen werden:
Zunächst werden ein erfindungsgemäßes Funktionselement 10 und ein Werkstück 50, insbesondere ein Blechteil, in welches ein Formloch eingebracht ist, bereitgestellt. Sodann wird das Funktionselement 10 in das Formloch eingeführt, sodass die Werkstückanlagefläche 17 der Oberfläche 51 zugewandt ist.

Dabei wird eine Einpresskraft in die Anschlagfläche 15 eingeleitet, welche bewirkt, dass die Werkstückanlagefläche 17 in Anlage mit dem Werkstück 50 gebracht wird. Diese Einpresskraft kann genutzt werden, um Material des Werkstücks 50 in den Dichtungsbereich 19 gedrängt und an die Anpressfläche 21 angepresst wird. Zu diesem Zweck kann eine in den Figuren nicht gezeigte Matrize auf der Werkstückanlagefläche 17 abgewandte Oberfläche 53 vorgesehen sein. Durch die Einpresskraft wird ein Stempel der Matrize in die Oberfläche 53 eingepresst, wobei sich in einem dem Loch angrenzenden Bereich des Werkstücks 50 eine Ringnut 55 ausbildet. Das Einpressen des Stempels der Matrize in das Werkstück 50 in einen dem Loch angrenzenden Bereich verdrängt somit Material des Werkstücks 50, das in den Dichtungsbereich 19 fließt und sich dabei an die Anpressfläche 21 anschmiegt.

Grundsätzlich ist auch denkbar, zunächst das Element 10 in das Werkstück 50 einzubringen und den Schritt des Verdrängens des Materials mittels der Matrize in einem separaten und/oder anschließenden Schritt zu bewirken.

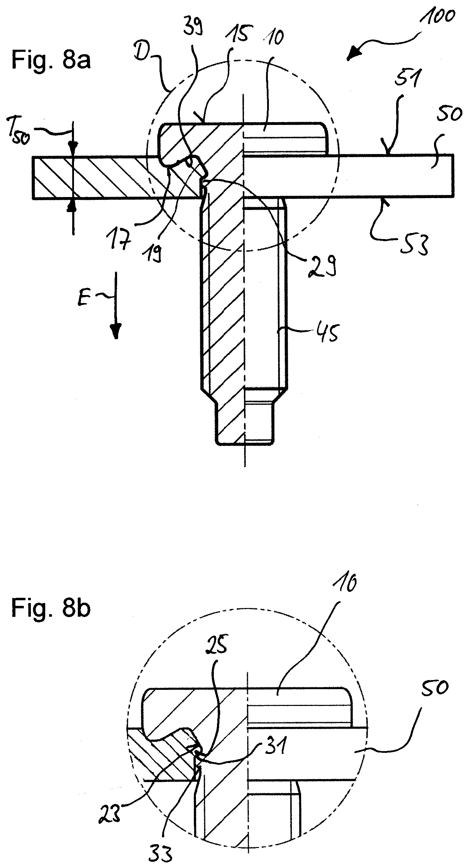

Bei dem Zusammenbauteil 100 der Fig. 8a, 8ab wird das Verdrängen des Materials nicht durch eine Matrize mit einem Stempel bewirkt, sondern die Oberfläche 53 des Werkstücks 50 liegt auf einer im Bereich um das Loch im Wesentlichen ebenen Auflagefläche auf. Das Verdrängen des Materials wird hier durch ein teilweises Einpressen des Kopfs 43 in die Oberfläche 51 bewirkt. Das Material kann aufgrund der ebene Auflagefläche nicht nach unten ausweichen und wird daher in den Dichtungsbereich 19 gedrängt, bis es an der ersten Teilfläche 23 flächig und damit dicht anliegt.

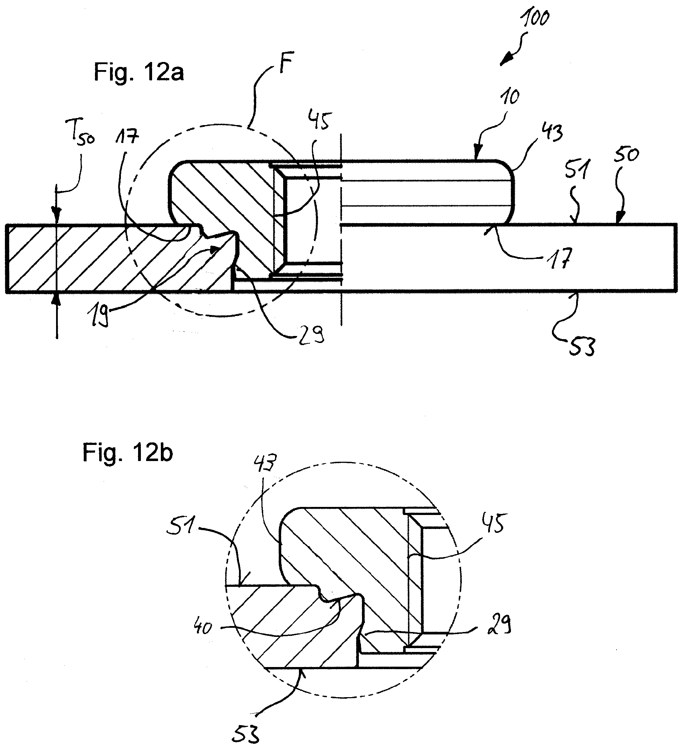

Bei dem Zusammenbauteil 100 gemäß den Fig. 12a, 12ab wird das Verdrängen des Materials durch die Erhebung 40 bewirkt. Der Kopf 43 wird nicht in das Werkstück 50 eingepresst, sondern nur gegen dessen Oberfläche 51 gedrückt bis die Werkstückanlagefläche 17 an ihr anliegt. Dabei dringt die Erhebung 40 in das Werkstück 50 ein. Deren nach radial innen abfallende Keilform unterstützt ein gerichtetes Verdrängen des Materials in den Dichtungsbereich 19.

Es versteht sich, dass die vorstehend beschriebenen Konzepte des Verdrängens des Materials kombiniert werden können, falls es im jeweiligen Anwendungsfall dienlich ist.

Die hier gezeigten und beschriebenen Ausführungsbeispiele haben gemein, dass diese ein Funktionselement bzw. ein Zusammenbauteil bereitstellen, welche bei geringem Aufwand und ohne zusätzliches Dichtmittel eine dichte Verbindung eines Zusammenbauteils ermöglichen. Durch eine geeignete Wahl der Ausgestaltung, insbesondere räumliche Anordnung, Erstreckung und/oder Neigung, der ersten und zweiten Teilfläche, der ersten und zweiten Flanke, des Übergangsabschnitts und/oder des Verbindungsabschnitts kann das Funktionselement an die jeweils vorliegenden Bedingungen angepasst werden.

Vorstehende Ausführungsbeispiele beziehen sich auf Funktionselemente, die in vorgelochte Werkstücke eingebracht werden können. Es ist aber auch möglich, dass diese Elemente selbststanzend ausgebildet sind, insbesondere Mutterelemente oder Bolzenelemente, deren Schaft sich von der Anschlagfläche erstreckt. Deren Befestigungsabschnitt kann zu diesem Zweck mit einer dem Werkstück zugewandten Stanzkante versehen sein.

### Bezugszeichenliste

- 10: Funktionselement
- 11: Funktionsabschnitt
- 13: Befestigungsabschnitt
- 15: Anschlagfläche
- 17: Werkstückanlagefläche
- 19: Dichtungsbereich
- 21: Anpressfläche
- 23: erste Teilfläche
- 25: zweite Teilfläche
- 27: Übergangsbereich
- 29: Vorsprung
- 28: Übergangsabschnitt
- 31: erste Flanke
- 33: zweite Flanke
- 35: Verbindungsabschnitt
- 37: Verdrehsicherungsmerkmal
- 39: Vertiefung
- 40: Erhebung
- 41: Schaft
- 43: Kopf
- 45: Gewinde

- 50: Werkstück
- 51: Oberfläche
- 53: Oberfläche
- 55: Ringnut

- 100: Zusammenbauteil

- E: Einpressrichtung
- T₅₀: Dicke des Werkstücks

## Patentansprüche

1. Funktionselement (10) zum Einpressen in ein Werkstück (50), insbesondere in ein Blechteil, umfassend
einen Funktionsabschnitt (11) und
einen Befestigungsabschnitt (13) mit
einer Anschlagfläche (15) zum Einleiten einer Einpresskraft in das Funktionselement (10),
einer der Anschlagfläche (15) gegenüberliegenden Werkstückanlagefläche (17), die in Anlage mit dem Werkstück (50) bringbar ist und die insbesondere flanschartig ausgestaltet ist, und
einem in einer Axialrichtung und/oder Radialrichtung des Funktionselements (10) zwischen der Werkstückanlagefläche (17) und dem Funktionsabschnitt (11) liegenden Dichtungsbereich (19) zum Aufnehmen von verdrängtem Material des Werkstücks (50), welcher eine Anpressfläche (21) für das verdrängte Material ausbildet, um eine Verbindung zwischen dem Funktionselement (10) und dem Werkstück (50) abzudichten,
wobei der Befestigungsabschnitt (13) einen Vorsprung (29) aufweist, der den Dichtungsbereich (19) in Axialrichtung begrenzt und der eine dem Dichtungsbereich (19) zugewandte erste Flanke (31) sowie eine dem Dichtungsbereich (19) abgewandte zweite Flanke (33) aufweist, die schräg und unterschiedlich stark geneigt zu der Axialrichtung verlaufen,
und wobei die erste Flanke (31) stärker zu der Axialrichtung geneigt ist als die zweite Flanke (33),
**dadurch gekennzeichnet, dass** die zweite Flanke (33) etwa 15° bis etwa 35° zu der Axialrichtung geneigt ist und
die Werkstückanlagefläche (17) eine Erhebung (40) aufweist, die in einem Querschnitt gesehen zumindest abschnittsweise keilförmig ausgestaltet ist.

2. Funktionselement (10) nach Anspruch 1,
**dadurch gekennzeichnet, dass** die zweite Flanke (33) etwa 25° zu der Axialrichtung geneigt ist.

3. Funktionselement (10) nach Anspruch 1 oder 2,
**dadurch gekennzeichnet, dass** die erste Flanke (31) etwa 50° bis etwa 70°, insbesondere etwa 60°, zu der Axialrichtung geneigt ist.

4. Funktionselement (10) nach einem der Ansprüche 1 bis 3,
**dadurch gekennzeichnet, dass** die erste Flanke (31) und die zweite Flanke (33) durch einen Verbindungsabschnitt (35) miteinander verbunden sind, in dem der Vorsprung (29) einen konstanten Durchmesser aufweist.

5. Funktionselement (10) nach einem der Ansprüche 1 bis 4,
**dadurch gekennzeichnet, dass** die erste Flanke (31) zumindest einen Teil der Anpressfläche (21) ausbildet.

6. Funktionselement (10) nach einem der Ansprüche 1 bis 5,
**dadurch gekennzeichnet, dass** die Werkstückanlagefläche (17) eine Vertiefung (39), insbesondere Ringvertiefung aufweist.

7. Funktionselement (10) nach Anspruch 6,
**dadurch gekennzeichnet, dass** sich die erste Teilfläche (23) in die Vertiefung (39) erstreckt.

8. Funktionselement (10) nach einem der Ansprüche 1 bis 7,
**dadurch gekennzeichnet, dass** die erste Teilfläche (23) in die Erhebung (40) übergeht.

9. Funktionselement (10) nach einem der Ansprüche 1 bis 8,
**dadurch gekennzeichnet, dass** die Werkstückanlagefläche (17) in die erste Teilfläche (23) übergeht.

10. Zusammenbauteil (100), das ein Werkstück (50), insbesondere ein Blechteil, und ein Funktionselement (10) nach einem der Ansprüche 1 bis 9 aufweist, wobei das Funktionselement (10) in ein in dem Werkstück vorgefertigtes Loch oder ein durch das Funktionselement (10) gestanztes Loch eingepresst ist, sodass durch das Einpressen oder nach dem Einpressen verdrängtes Material des Werkstücks (50) in dem Dichtungsbereich (19) aufgenommen ist und dicht an der Anpressfläche (21) anliegt.

11. Zusammenbauteil nach Anspruch 10,
**dadurch gekennzeichnet, dass** das verdrängte Material des Werkstücks (50) an dem Vorsprung (29) anliegt oder den Vorsprung (29) zumindest teilweise oder vollständig umschließt.

12. Zusammenbauteil nach Anspruch 10 oder 11,
**dadurch gekennzeichnet, dass** eine Dicke (T₅₀) des Werkstücks (50) zumindest im Bereich des Lochs kleiner oder im Wesentlichen gleich einer axialen Erstreckung des Dichtungsbereichs (19) ist oder die Dicke (T₅₀) des Werkstücks (50) zumindest im Bereich des Lochs größer oder im Wesentlichen gleich einer axialen Erstreckung des Dichtungsbereichs (19) ist.

13. Verfahren zum Herstellen eines Zusammenbauteils (100) nach einem der Ansprüche 10 bis 12, umfassend die Schritte:
- Bereitstellen eines Funktionselements (10) nach einem der Ansprüche 1 bis 9,
- Bereitstellen eines Werkstücks (50), insbesondere eines Blechteils,
- Einführen des Funktionselements (10) in ein vorgefertigtes Loch in dem Werkstück oder in ein durch das Funktionselement (10) gestanztes Loch und Einleiten einer Einpresskraft in die Anschlagfläche (15), sodass die Werkstückanlagefläche (17) in Anlage mit dem Werkstück (50) gebracht wird, und
- Verdrängen von Material des Werkstücks (50) in den Dichtungsbereich (19), so dass das Material an die Anpressfläche (21) angepresst wird, um eine dichte Verbindung zwischen dem Funktionselement (10) und dem Werkstück (50) herzustellen.

## Claims

1. A functional element (10) for pressing into a workpiece (50), in particular into a sheet metal part, said functional element (10) comprising
a functional section (11); and
a fastening section (13) having
an abutment surface (15) for introducing a press-in force into the functional element (10);
a workpiece contact surface (17) which is disposed opposite the abutment surface (15), which can be brought into contact with the workpiece (50), and which is in particular of a flange-like design; and
a sealing region (19) for receiving displaced material of the workpiece (50), said sealing region (19) being disposed between the workpiece contact surface (17) and the functional section (11) in an axial direction and/or a radial direction of the functional element (10) and forming a contact surface (21) for the displaced material to seal a connection between the functional element (10) and the workpiece (50),
wherein the fastening section (13) has a projection (29) which bounds the sealing region (19) in the axial direction and which has a first flank (31) facing the sealing region (19) and a second flank (33) which is remote from the sealing region (19) and which extends obliquely and inclined to different degrees with respect to the axial direction,
and wherein the first flank (31) is more inclined with respect to the axial direction than the second flank (33),
**characterized in that** the second flank (33) is inclined approximately 15° to approximately 35° with respect to the axial direction,
the workpiece contact surface (17) has an elevated portion (40) which is at least sectionally of wedge-shaped design viewed in a crosssection.

2. A functional element (10) according to claim 1,
**characterized in that** the second flank (33) is inclined approximately 25° with respect to the axial direction.

3. A functional element (10) according to claim 1 or 2,
**characterized in that** the first flank (31) is inclined approximately 50° to approximately 70°, in particular approximately 60°, with respect to the axial direction.

4. A functional element (10) according to any one of the claims 1 to 3, **characterized in that** the first flank (31) and the second flank (33) are connected to one another by a connection section (35) in which the projection (29) has a constant diameter.

5. A functional element (10) according to any one of the claims 1 to 4, **characterized in that** the first flank (31) forms at least a part of the contact surface (21).

6. A functional element (10) according to any one of the claims 1 to 5, **characterized in that** the workpiece contact surface (17) has a recess (39), in particular a ring recess.

7. A functional element (10) according to claim 6,
**characterized in that** the first part surface (23) extends into the recess (39).

8. A functional element (10) according to any one of the claims 1 to 7, **characterized in that** the first part surface (23) merges into the elevated portion (40).

9. A functional element (10) according to any one of the claims 1 to 8, **characterized in that** the workpiece contact surface (17) merges into the first part surface (23).

10. A component assembly (100) which has a workpiece (50), in particular a sheet metal part, and a functional element (10) according to any one of the claims 1 to 9, wherein the functional element (10) is pressed into a hole prefabricated in the workpiece or into a hole punched by the functional element (10) such that material of the workpiece (50) displaced by the pressing in or after the pressing in is received in the sealing region (19) and tightly contacts the contact surface (21).

11. A component assembly according to claim 10,
**characterized in that** the displaced material of the workpiece (50) contacts the projection (29) or at least partly or completely surrounds the projection (29).

12. A component assembly according to claim 10 or 11,
**characterized in that** a thickness (T₅₀) of the workpiece (50) is smaller than or substantially equal to an axial extent of the sealing region (19) at least in the region of the hole or the thickness (T₅₀) of the workpiece (50) is greater than or substantially equal to an axial extent of the sealing region (19) at least in the region of the hole.

13. A method of manufacturing a component assembly (100) according to any one of the claims 10 to 12, comprising the steps:
- providing a functional element (10) according to any one of the claims 1 to 9;
- providing a workpiece (50), in particular a sheet metal part;
- inserting the functional element (10) into a prefabricated hole in the workpiece or into a hole punched by the functional element (10) and introducing a press-in force into the abutment surface (15) such that the workpiece contact surface (17) is brought into contact with the workpiece (50); and
- displacing material of the workpiece (50) into the sealing region (19) such that the material is pressed against the contact surface (21) to establish a sealed connection between the functional element (10) and the workpiece (50).

## Revendications

1. Elément fonctionnel (10) destiné à être enfoncé dans une pièce (50), en particulier dans une pièce de tôle, comprenant
une portion fonctionnelle (11) et
une portion de fixation (13) comprenant
une surface de butée (15) pour appliquer une force d'enfoncement à l'élément fonctionnel (10),
une surface d'appui de pièce (17) opposée à la surface de butée (15), qui peut être amenée en appui avec la pièce (50) et qui est conçue en particulier en forme de bride, et
une zone d'étanchéité (19) située entre la surface d'appui de pièce (17) et la portion fonctionnelle (11) dans une direction axiale et/ou une direction radiale de l'élément fonctionnel (10) et destinée à recevoir le matériau refoulé de la pièce (50), zone qui forme une surface de pression (21) pour le matériau refoulé, afin d'étanchéifier une jonction entre l'élément fonctionnel (10) et la pièce (50),
la portion de fixation (13) présentant une saillie (29) qui délimite la zone d'étanchéité (19) dans la direction axiale et qui présente un premier flanc (31) tourné vers la zone d'étanchéité (19) ainsi qu'un deuxième flanc (33) détourné de la zone d'étanchéité (19), lesquels s'étendent en oblique et avec une inclinaison différente par rapport à la direction axiale,
et le premier flanc (31) étant incliné par rapport à la direction axiale plus fortement que le deuxième flanc (33),
**caractérisé en ce que** le deuxième flanc (33) est incliné d'environ 15° à environ 35° par rapport à la direction axiale, et
**en ce que** la surface d'appui de pièce (17) présente une surélévation (40) conçue au moins localement en forme de coin, vue en coupe transversale.

2. Elément fonctionnel (10) selon la revendication 1,
**caractérisé en ce que** le deuxième flanc (32) est incliné d'environ 25° par rapport à la direction axiale.

3. Elément fonctionnel (10) selon la revendication 1 ou 2,
**caractérisé en ce que** le premier flanc (31) est incliné d'environ 50° à environ 70°, en particulier d'environ 60°, par rapport à la direction axiale.

4. Elément fonctionnel (10) selon l'une des revendications 1 à 3, **caractérisé en ce que** le premier flanc (31) et le deuxième flanc (33) sont reliés l'un à l'autre par une portion de liaison (35) dans laquelle la saillie (29) présente un diamètre constant.

5. Elément fonctionnel (10) selon l'une des revendications 1 à 4, **caractérisé en ce que** le premier flanc (31) constitue au moins une partie de la surface de pression (21).

6. Elément fonctionnel (10) selon l'une des revendications 1 à 5, **caractérisé en ce que** la surface d'appui de pièce (17) présente un renfoncement (39), en particulier un renfoncement annulaire.

7. Elément fonctionnel (10) selon la revendication 6,
**caractérisé en ce que** la première surface partielle (23) s'étend jusque dans le renfoncement (39).

8. Elément fonctionnel (10) selon l'une des revendications 1 à 7, **caractérisé en ce que** la première surface partielle (23) se prolonge par la surélévation (40).

9. Elément fonctionnel (10) selon l'une des revendications 1 à 8, **caractérisé en ce que** la surface d'appui de pièce (17) se prolonge par la première surface partielle (23).

10. Pièce d'assemblage (100) comprenant une pièce (50), en particulier une pièce de tôle, et un élément fonctionnel (10) selon l'une des revendications 1 à 9, l'élément fonctionnel (10) étant enfoncé dans un trou préfabriqué dans la pièce ou dans un trou découpé par l'élément fonctionnel (10), de sorte que le matériau de la pièce (50) refoulé par l'enfoncement ou après l'enfoncement est reçu dans la zone d'étanchéité (19) et s'applique de manière étanche contre la surface de pression (21).

11. Pièce d'assemblage selon la revendication 10,
**caractérisée en ce que** le matériau refoulé de la pièce (50) est en appui contre la saillie (29) ou entoure au moins partiellement ou complètement la saillie (29).

12. Pièce d'assemblage selon la revendication 10 ou 11,
**caractérisée en ce qu'**une épaisseur (T₅₀) de la pièce (50) au moins dans la zone du trou est inférieure ou sensiblement égale à une extension axiale de la zone d'étanchéité (19), ou l'épaisseur (T₅₀) de la pièce (50) au moins dans la zone du trou est supérieure ou sensiblement égale à une extension axiale de la zone d'étanchéité (19).

13. Procédé de fabrication d'une pièce d'assemblage (100) selon l'une des revendications 10 à 12, comprenant les étapes consistant à :
- fournir un élément fonctionnel (10) selon l'une des revendications 1 à 9,
- fournir une pièce (50), en particulier une pièce de tôle,
- introduire l'élément fonctionnel (10) dans un trou préfabriqué dans la pièce ou dans un trou découpé par l'élément fonctionnel (10), et appliquer une force d'enfoncement à la surface de butée (15), de sorte que la surface d'appui de pièce (17) est amenée en appui avec la pièce (50), et
- refouler le matériau de la pièce (50) vers la zone d'étanchéité (19), de sorte que le matériau est pressé contre la surface de pression (21), afin d'établir une jonction étanche entre l'élément fonctionnel (10) et la pièce (50).
